# EUROPEAN PATENT SPECIFICATION

(11) **EP 1 700 734 B1**
(45) Date of publication and mention of the grant of the patent: **02.09.2009**
(21) Application number: 04807728.3
(22) Date of filing: 24.12.2004
(51) Int. Cl.: B60K 8/00, B60K 1/04, B60K 11/02, H01M 8/00, H01M 8/04, H01M 8/10, H01M 8/24

(54) **FUEL CELL VEHICLE**
BRENNSTOFFZELLENFAHRZEUG
VEHICULE A PILE A COMBUSTIBLE

(30) Priority: 24.12.2003 JP 2003427797
(43) Date of publication of application: 13.09.2006
(73) Proprietor: HONDA MOTOR CO., LTD., Tokyo 107-8556 (JP)
(72) Inventor: OKAZAKI, Koji, KK HONDA GIJUTSU KENKYUSHO, Wako-shi, Saitama 3510193 (JP)
(74) Representative: Piésold, Alexander James
(86) International application number: PCT/JP2004/019371
(87) International publication number: WO 2005/061259

(56) References cited:
- WO-A-02/053402
- FR-A- 2 841 043
- JP-A- 6 169 039
- JP-A- 6 209 562
- JP-A- 11 178 115
- JP-A- 2000 247 157
- JP-A- 2000 348 753
- JP-A- 2002 033 108
- JP-A- 2002 247 712
- JP-A- 2003 118 396
- JP-A- 2003 118 396
- JP-A- 2003 203 650
- JP-U- 50 094 865

## Description

### TECHNICAL FIELD

The present invention relates to a fuel cell vehicle equipped with a polymer electrolyte fuel cell.

### BACKGROUND ART

In recent years, with the growing attention to the environmental protection, many attempts for substituting the fuel cell for the internal combustion engine in the power source of the automobile have been made so far (see Patent Document 1). Generally, the automobile equipped with the fuel cell is referred to as the fuel cell vehicle.

A polymer electrolyte fuel cell is one type of the fuel cell. The polymer electrolyte fuel cell has an electrolyte electrode assembly including an anode electrode, a cathode electrode, and an electrolyte interposed between the anode electrode and the cathode electrode. For example, the electrolyte is a solid polymer electrolyte membrane such as a perfluorosulfonic acid polymer membrane. The electrolyte electrode assembly is sandwiched between a pair of separators to form a unit power generation cell. A plurality of unit power generation cells are stacked together to form a stack. Current collecting plates are provided at ends of the stack. One of the current collecting plates is electrically connected to the respective anode electrodes of the unit power generation cells, and the other of the current collecting plates is electrically connected to the respective cathode electrodes of the unit power generation cells.

Typically, the stack includes metal cooling plates in addition to the unit power generation cells. The cooling plates are interposed between the unit power generation cells. One cooling plate is present for every stack of two or three unit power generation cells. The cooling plate may be provided in each space between the adjacent unit power generation cells.

The cooling plate has a coolant flow field for a coolant. During operation of the polymer electrolyte fuel cell, the coolant flows through the coolant flow field by a coolant supply/discharge system connected to the stack. Thus, the operating temperature of the stack is maintained in the range of 80°C to 90°C. The electrons produced in the respective unit power generation cells are collected from the current collecting plates, and used as the electrical energy for energizing an external load connected to the fuel cell.
Patent Document 1: Japanese Laid-Open Patent Publication No. 2003-118396
The document FR-A-2 841 043 discloses a fuel cell vehicle having a vehicle body and a fuel cell mounted in said vehicle body, said fuel cell including a stack formed by stacking a plurality of unit power generation cells, a stack container case containing said stack, and a condenser provided in said stack container case, wherein in said fuel cell, each of said unit power generation cells includes an electrolyte electrode assembly and a first separator and a second separator sandwiching said electrolyte electrode assembly, said electrolyte electrode assembly including an anode electrode, and a cathode electrode, and an electrolyte interposed between said anode electrode and said cathode electrode; an air supplied from an air inlet of said vehicle body contacts said condenser to condense the liquid coolant vaporized at said stack container case when cooling said stack.

### DISCLOSURE OF INVENTION

### PROBLEMS TO BE SOLVED BY THE INVENTION

In the case where the coolant flows inside the stack as described above, if the coolant is water or the like having electrical conductivity, the electrical current may flow through the coolant. Under the circumstances, the electrical current flows to the coolant supply/discharge system. As a result, electrical leakage to the ground or liquid occurs, and the output of the polymer electrolyte fuel cell is lowered. Thus, the fuel cell vehicle travels with difficulty.

In an attempt to address the problem, it may be contemplated to apply insulating coating to the coolant flow field for the coolant. However, the opening area of the coolant flow field is small, and the coolant flow field includes curved portions. Therefore, it is difficult to provide the insulating coating.

Further, in the polymer electrolyte fuel cell of this type, the stack needs to be connected to the coolant supply/discharge system. For example, in the above-mentioned Patent Document 1, the fuel cell is provided under the passenger compartment of the vehicle body. A radiator for cooling the fuel cell is provided in the bonnet at the front portion of the vehicle body, and the radiator is connected to the fuel cell through a coolant water pipe. In the structure, a large space for providing the fuel cell in the vehicle body is required, and the weight of the fuel cell vehicle is large. Further, the arrangement of mechanisms/members in the fuel cell vehicle, i.e., the layout of device components is limited undesirably.

A general object of the present invention is to provide a fuel cell vehicle in which it is possible to avoid electrical leakage to the liquid or ground in a fuel cell.

A main object of the present invention is to provide a fuel cell vehicle in which the layout of device components can be designed freely.

According to an embodiment of the present invention, a fuel cell vehicle has a vehicle body and a polymer electrolyte fuel cell mounted in the vehicle body, the fuel cell including a stack formed by stacking a plurality of unit power generation cells, a stack container case containing the stack, and a condenser provided in the stack container case, wherein
in the polymer electrolyte fuel cell, each of the unit power generation cells includes an electrolyte electrode assembly and a first separator and a second separator sandwiching the electrolyte electrode assembly, the electrolyte electrode assembly including an anode electrode, a cathode electrode, and a solid polymer electrolyte interposed between the anode electrode and the cathode electrode;
the stack is immersed in an electrically insulating liquid coolant inside the stack container case to cool the stack;
the stack container case is provided under a passenger compartment of the vehicle body; and
an air supplied from an air inlet of the vehicle body contacts the condenser to condense the liquid coolant vaporized at the stack container case when cooling the stack.

Since the stack is cooled by immersing the stack in the coolant, it is not necessary that the coolant flows through the stack. Thus, no coolant flow field needs to be provided in the stack, and no insulating coating for the coolant flow field is required. Accordingly, the structure of the polymer electrolyte fuel cell is simplified significantly. As a result, reduction in the size and the weight of the polymer electrolyte fuel cell is achieved. Therefore, the space needed for providing the polymer electrolyte fuel cell is reduced, and the layout of device components in the fuel cell vehicle can be designed freely.

Further; by using the insulating liquid as the coolant, electrical conduction to the coolant, and electrical leakage to the liquid or ground is prevented, so that the power generation performance of the polymer electrolyte fuel cell is not lowered.

It is preferable that coating is applied to at least one of a surface of the condenser and an inner surface of the stack container case. In the structure, even if the condenser or the stack container case is made of metal, the metal particles from the condenser or the stack container case are not mixed into the liquid coolant, and the liquid coolant is maintained insulating. For example, it is preferable that the coating comprises fluorine resin.

It is preferable that the stack includes a cooling plate having at least one groove for allowing the liquid coolant to flow into the stack. In the structure, the inner part of the stack is cooled. Therefore, improvement in the efficiency of cooling the stack is achieved.

Further, it is preferable that a plurality of protrusions are provided on an inner surface of the stack container case, and the protrusions protrude toward the stack, and are exposed from the liquid surface of the liquid coolant. In the structure, in the case where the polymer electrolyte fuel cell is mounted in a vehicle, even if the vehicle body is tilted, the liquid coolant is dammed by the protrusions. Thus, the stack is not exposed from the liquid coolant, and the efficiency of cooling the stack is not lowered.

Further, it is preferable that a trapping section for trapping the condensed liquid coolant at the condenser, and a circulation mechanism for allowing the liquid coolant to flow from the trapping section back to the stack container case are provided. By the operation of the circulation mechanism, the condensed liquid coolant returns to the stack container case efficiently.

It is preferable that the liquid coolant is a liquid which can be boiled into vapor in the nucleate boiling state. If boiling occurs in the film boiling state, the stack is covered by a vapor film, and the contact area between the stack and the liquid coolant is reduced. As a result, the efficiency of cooling the stack may be lowered undesirably. In order to ensure that the nucleate boiling state is induced, it is preferable that the boiling temperature of the liquid coolant is lower than the operating temperature of the stack by 10°C to 25°C.

In any cases, it is preferable that an air discharge assistance mechanism for assistance to discharge the air supplied from the air inlet to the outside of the vehicle body is provided. The period from the time when the air flows into the vehicle body to the time when the air flows out of the vehicle body is shortened. Thus, the heat conduction efficiency between the air and the condenser is improved. The condenser is cooled efficiently, and the vaporized liquid coolant is condensed efficiently

In the present invention, the stack is immersed in the insulating liquid coolant. Therefore, no coolant flow field for the coolant needs to be provided in the stack. Thus, no pipes for supply/discharge of the coolant need to be connected to the stack. In the structure, reduction in the size and the weight of the polymer electrolyte fuel cell is achieved. As a result, the space needed for providing the polymer electrolyte fuel cell is reduced, and the layout of device components in the fuel cell vehicle can be designed freely.

### BRIEF DESCRIPTION OF DRAWINGS

FIG. 1 is an overall perspective view schematically showing a fuel cell vehicle according to an embodiment of the present invention.
FIG. 2 is an overall perspective view schematically showing a polymer electrolyte fuel cell mounted in the fuel cell vehicle in FIG. 1.
FIG. 3 is an overall perspective view schematically showing a stack of the polymer electrolyte fuel cell in FIG. 2.
FIG. 4 is a horizontal cross sectional view showing the stack in FIG. 3.
FIG. 5 is a plan view with cutaway showing the polymer electrolyte fuel cell in FIG. 2.
FIG. 6 is a cross sectional view taken along a line VI-VI in FIG. 5.
FIG. 7 is a cross sectional view taken along a line VII-VII in FIG. 5.
FIG. 8 is a plan view with cutaway showing the state in which the polymer electrolyte fuel cell in FIG. 2 is mounted in a vehicle body.
FIG. 9 is a front view with partial cutaway showing the state in which the polymer electrolyte fuel cell in FIG. 2 is provided in a vehicle body.
FIG. 10 is an overall perspective view schematically showing a fuel cell vehicle having a duct with openings on both sides of the vehicle body.
FIG. 11 is an overall perspective view schematically showing a fuel cell vehicle having a duct with an opening on the front side of the vehicle body.

### BEST MODE FOR CARRYING OUT THE INVENTION

Hereinafter, a fuel cell vehicle according to a preferred embodiment of the present invention will be described with reference to the accompanying drawings.

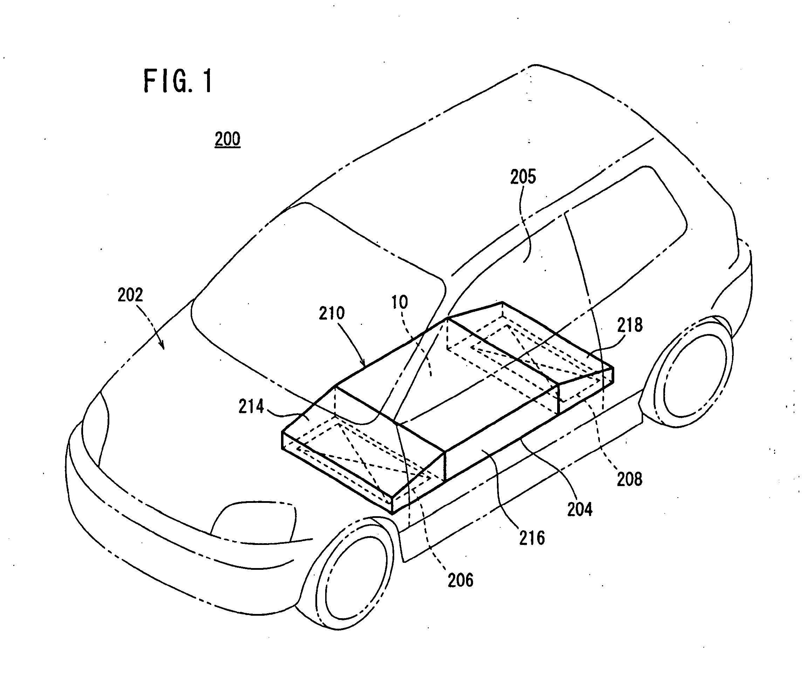

FIG. 1 is an overall perspective view showing a fuel cell vehicle according to the embodiment of the present invention. A polymer electrolyte fuel cell 10 is fixedly positioned on an under panel 204, under a passenger compartment 205, of a vehicle body 202 of the fuel cell vehicle 200. Further, on the under panel 204, supply louvers 206 are provided on the vehicle front side of the polymer electrolyte fuel cell 10, and exhaust louvers 208 are provided on the vehicle rear side of the polymer electrolyte fuel cell 10. The supply louvers 206, the polymer electrolyte fuel cell 10, and the exhaust louvers 208 are covered by a hood 210 fixedly positioned on the under panel 204.

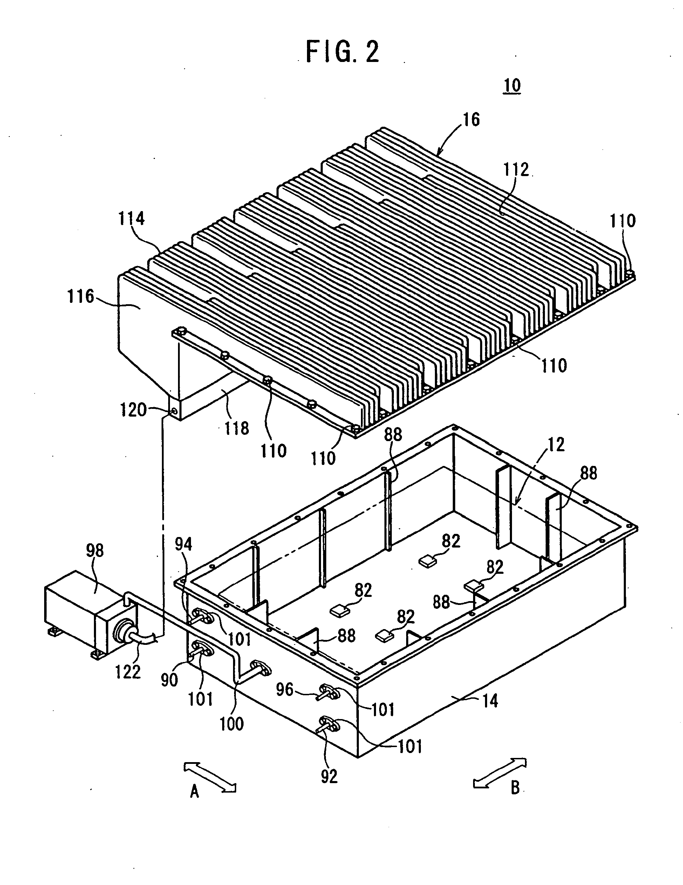

Firstly, structure of the polymer electrolyte fuel cell 10 will be described. FIG. 2 is an overall perspective view schematically showing the polymer electrolyte fuel cell 10. As shown in FIG. 2, the polymer electrolyte fuel cell 10 includes a stack 12, a metallic stack container case 14 containing the stack 12, and a condenser 16. The condenser 16 is provided in an opening of the stack container case 14 at an upper position.

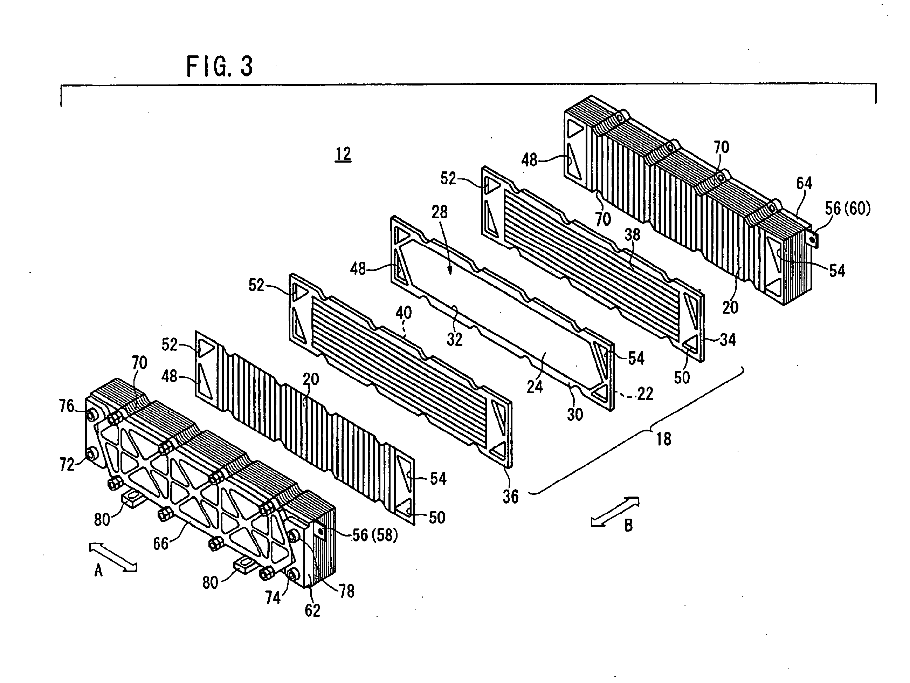

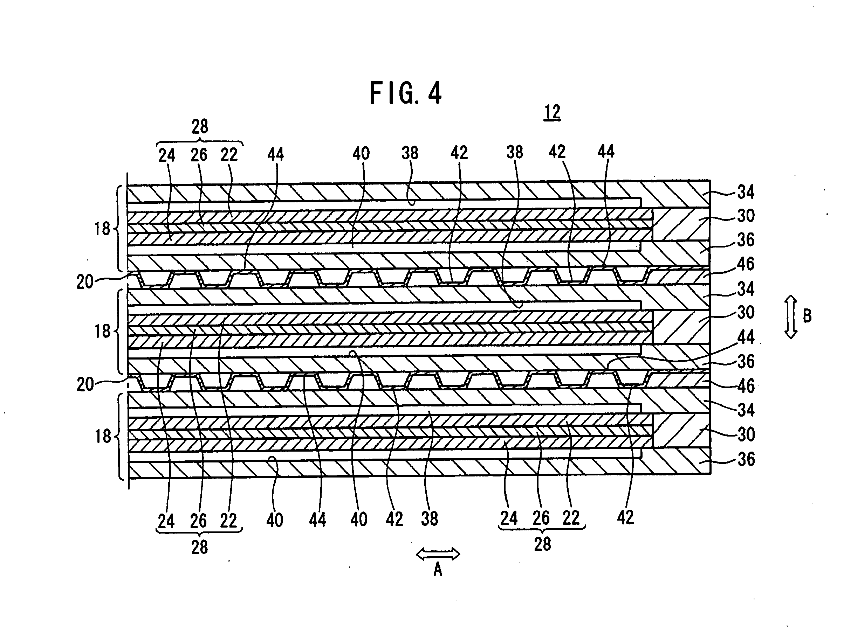

As shown in FIG. 3, the stack 12 includes unit power generation cells 18 and cooling plates 20 provided adjacent to the unit power generation cells 18. As shown in FIG. 4, each of the unit power generation cells 18 includes an electrolyte electrode assembly (hereinafter also referred to as the "MEA") 28. The electrolyte electrode assembly 28 includes an anode electrode 22, a cathode electrode 24, and a solid polymer electrolyte membrane 26 interposed between the anode electrode 22 and the cathode electrode 24. The solid polymer electrolyte membrane 26 is made of perfluorosulfonic acid polymer. The MEA 28 is held in an opening 32 of a gasket 30 made of polytetrafluoroethylene (PTFE) resin.

The MEA 28 is sandwiched between a pair of separators 34, 36. The separator 34 in contact with the anode electrode 22 has a first gas flow field 38. Hydrogen as a fuel gas flows through the first gas flow field 38. The separator 36 in contact with the cathode electrode 24 has a second gas flow field 40. The air containing oxygen (oxygen-containing gas) flows through the second gas flow field 40.

Further, the cooling plate 20 includes first protrusions 42 protruding away from the separator 36 toward the separator 34 and second protrusions 44 protruding away from the separator 34 toward the separator 36 to form a continuous corrugated plate (see FIG. 4). That is, corrugations are arranged from one side to the other side of the stack 12, i.e., in a direction indicated by an arrow A in FIG. 3. Thus, as shown in FIG. 4, except the opposite ends, the cooling plate 20 contacts the separator 34 at only respective tops of the first protrusions 42, and contacts the separator 36 at only respective tops of the second protrusions 44. In the structure, spaces are formed between the first protrusions 42 and the separator 36, and between the second protrusions 44 and the separator 34, respectively.

A spacer 46 is interposed between the end of the cooling plate 20 and the separator 34 or the separator 36 for preventing leakage of the air or the hydrogen.

In the structure, in FIG. 3, a first gas discharge passage 50 for discharging the hydrogen, a second gas discharge passage 48 for discharging the air, a first gas supply passage 52 for supplying the hydrogen, and a second gas supply passage 54 for supplying the air extend through a lower right corner, a lower left corner, an upper left corner, and an upper right corner, respectively, of the gaskets 30, the separators 34, 36, the cooling plates 20, and the spacers 46. It is a matter of course that the first gas supply passage 52 and the first gas discharge passage 50 are connected to the first gas flow field 38, and the second gas supply passage 54 and the second gas discharge passage 48 are connected to the second gas flow field 40.

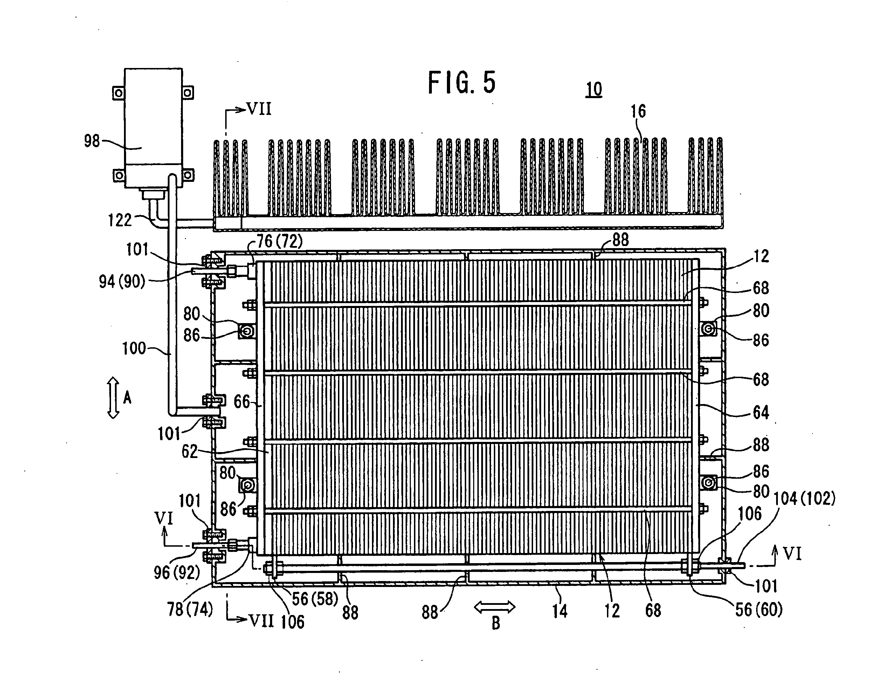

The unit power generation cells 18 and the cooling plates 20 are stacked alternately. Further, current collecting plates 58, 60 having tabs 56, insulating sheets (not shown), and end plates 62, 64 are provided at opposite ends. Further, a backup plate 66 is provided on the end plate 62. Components between the end plate 64 and the backup plate 66 are tightened together by tie rods 68 shown in FIG. 5 to form the stack 12. Further, recesses 70 are formed on upper and lower end surfaces of the stack 12 so as to prevent the stack 12 from structurally interfering with the tie rods 68.

The current collecting plate 60 is electrically connected to the anode electrodes 22 of the unit power generation cells 18. The current collecting plate 58 is electrically connected to the cathode electrodes 24 of the unit power generation cells 18.

In the structure, in FIG. 3, the end plate 62 has a first gas discharge port 74 as an outlet port for the hydrogen at a lower right corner, a second gas discharge port 72 as an outlet port for the air at a lower left corner, a first gas supply port 76 as an inlet port for the hydrogen at an upper left corner, and a second gas supply port 78 as a supply port for the air at an upper right corner. The first gas discharge port 74 is connected to the first gas discharge passage 50. The second gas discharge port 72 is connected to the second gas discharge passage 48. The first gas supply port 76 is connected to the first gas supply passage 52. The second gas supply port 78 is connected to the second gas supply passage 54. Further, two stays 80 are formed under the end plates 62, 64, protruding in the stacking direction of the unit power generation cells 18 indicated by an arrow B in FIG. 3.

The backup plate 66 is shaped in a manner such that it does not close the first gas discharge port 74, the second gas discharge port 72, the first gas supply port 76, and the second gas supply port 78 of the end plate 62.

As shown in FIG. 2, the stack container case 14 has a rectangular parallelepiped shape. The stack container case 14 has an opening on the upper side. Rubber support spacers 82 are provided on the bottom of the stack container case 14 at four positions. Further, bolt holes (not shown) are provided on the bottom of the stack container case 14, and bolts 86 extending through the stays 80 at the end plates 62, 64 are screwed into the bolt holes.

After the stack 12 is placed on the rubber support spacers 82, the bolts 86 are screwed into the bolt holes to fixedly position the stack 12. As a result, the bottom surface of the stack 12 is spaced away from the stack container case 14 by the thickness of the stay 80 and the thickness of the rubber support spacer 82. Thus, a space is formed between the bottom surface of the stack 12. and the stack container case 14. As described above, since the insulating sheets are interposed between the current collecting plate 58, 60 and the end plates 62, 64, no short circuit occurs between the end plates 62, 64 and the stack container case 14.

Further, plate members 88 are vertically provided on the inner wall surface of the stack container case 14. The plate members 88 protrude toward the side surfaces of the stack 12. In the structure, the stack 12 is surrounded by the front ends of the plate members 88, and positioned substantially at the center of the stack container case 14.

As shown in FIG. 2, five through holes are formed on one side surface of the stack container case 14. A first gas discharge pipe 92, a second gas discharge pipe 90, a first gas supply pipe 94, and a second gas supply pipe 96 pass through the through holes at the four corners. The first gas discharge pipe 92 is connected to the first gas discharge port 74. The second gas discharge pipe 90 is connected to the second gas discharge port 72. The first gas supply pipe 94 is connected to the first gas supply port 76. The second gas supply pipe 96 is connected to the second gas supply port 78. Further, an outlet pipe 100 extending from a coolant circulation pump 98 as described later passes through the through hole formed substantially at the center of the one side surface of the stack container case 14. It is a matter of course that rubber packing members 101 are provided between all of the pipes 90, 92, 94, 96, 100 and all of the through holes for preventing leakage of the coolant stored in the stack container case 14.

It is preferable that insulating coating of PTFE or the like is applied to the outer wall surfaces of the first gas discharge pipe 92, the second gas discharge pipe 90, the first gas supply pipe 94, and the second gas supply pipe 96. In the structure, even if metal particles or the like are mixed into the coolant stored in the stack container case 14 to cause the coolant to have electrical conductivity, shorting between the coolant and the pipes can be avoided.

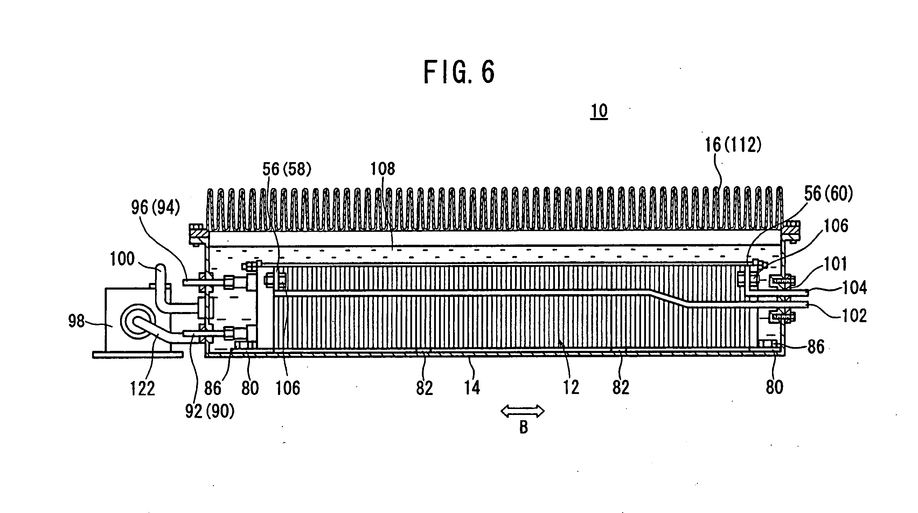

As shown in FIG. 6, two elongated through holes are formed on a side surface opposite to the one side surface, and terminal cables 102, 104 extend through the through holes. The terminal cables 102, 104 are connected to the tabs 56 of the current collecting plates 58, 60 with the bolts 106. In the same manner as described above, rubber packing members 101 are interposed between the terminal cables 102, 104 and the through holes to prevent leakage of the coolant, and to prevent electrical conduction from the terminal cables 102, 104 to the stack container case 14.

In the structure, insulating coating of PTFE is applied to the inner surface of the stack container case 14 and the plate members 88.

An insulating organic solvent 108 as the coolant is stored in the stack container case 14. Stated otherwise, the stack 12 is immersed in the organic solvent 108 inside the stack container case 14.

In this case, as the organic solvent 108, a liquid having a boiling temperature lower than the operating temperature of the stack 12 is selected. Specifically, lower alcohols such as methanol and ethanol, or solvents of fluorine compound such as perfluorocarbon and alternatives to CFC (chlorofluorocarbon) can be used.

In particular, it is preferable that the organic solvent 108 is a liquid which can be boiled in the nucleate boiling state, i.e. in the state where boiling occurs by developing vapor bubbles around the nucleation center. In the case of using a liquid which can be boiled in so called the film boiling state, the entire stack 12 is covered by the vapor film, and the contact surface between the stack 12 and the organic solvent 108 is reduced. Therefore, the efficiency of cooling the stack 12 may be lowered undesirably.

In order to ensure that boiling occurs in the nucleate boiling state, as the organic solvent 108, it is preferable to select a liquid having the boiling temperature lower than the operating temperature of the stack 12 by 10°C to 25°C. In the case of using a liquid where the value calculated by subtracting the boiling temperature from the operating temperature of the stack 12 is less than 10°C, nucleate boiling does not occur easily. Further, in the case of using a liquid where the value calculated by subtracting the boiling temperature from the operating temperature of the stack 12 is greater than 25°C, it is likely that film boiling occurs. Therefore, as the organic solvent 108, it is more preferable to select a liquid where the value calculated by subtracting the boiling temperature from the operating temperature of the stack 12 is in the range of 11°C to 23°C.

For example, in the case where the operating temperature of the stack 12 is 80°C, Novec HFE-7100 manufactured by Sumitomo 3M Ltd. (composition formula: C₄F₉OCH₃, boiling temperature: 61°C) can be used suitably. In the case where the operating temperature of the stack 12 is 90°C, Novec HFE-7200 manufactured by Sumitomo 3M Ltd. (composition formula: C₄F₉OC₂H₅, boiling temperature: 76°C) can be used suitably.

As described above, the condenser 16 is fixedly positioned, with bolts 110, in the opening of the stack container case 14 at the upper position (see FIG. 2). The condenser 16 includes a fin section 112, a guide section 116 protruding from one end of the fin section 112, and a trapping section 118 provided at a lower end of the guide section 116. The fin section 112 includes fins extending in the direction indicated by the arrow A in FIG. 2. The guide section 116 includes guide fins 114 in the vertical direction. PTFE coating is applied to at least the fin section 112 and the guide section 116.

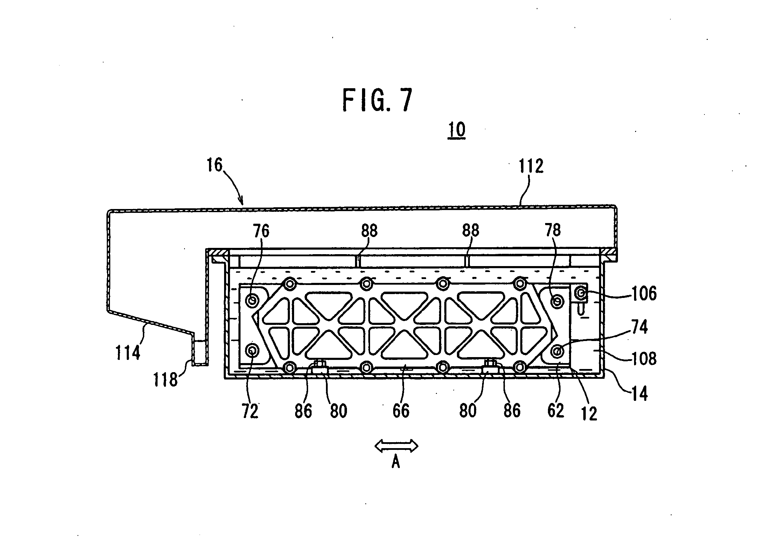

As shown in FIG. 7, the fins of the fin section 112 slightly get higher in the direction away from the guide section 116. Stated otherwise, the fins are slightly inclined downwardly from the end connected to the end of the stack container case 14 at the first gas supply port 76 and the second gas supply port 78 toward the guide section 116. Further, a drain window 120 provided on one end surface of the trapping section 118 is connected to an inlet pipe 122 extending to the coolant circulation pump 98 (see FIG. 2).

The coolant circulation pump 98 is part of a circulation mechanism. By operation of the coolant circulation mechanism, after the organic solvent 108 is vaporized by cooling the stack 12, and condensed by the condenser 16, the organic solvent 108 flows back to the stack container case 14. As described above, the outlet pipe 100 from the coolant circulation pump 98 passes through the through hole formed in one end surface of the stack container case 14.

It is preferable that lining treatment is applied to the inner walls of the inlet pipe 122 and the outlet pipe 100 in advance. Further, for the reason stated above, it is preferable that insulating coating is applied to at least the outer circumferential wall of the outlet pipe 100.

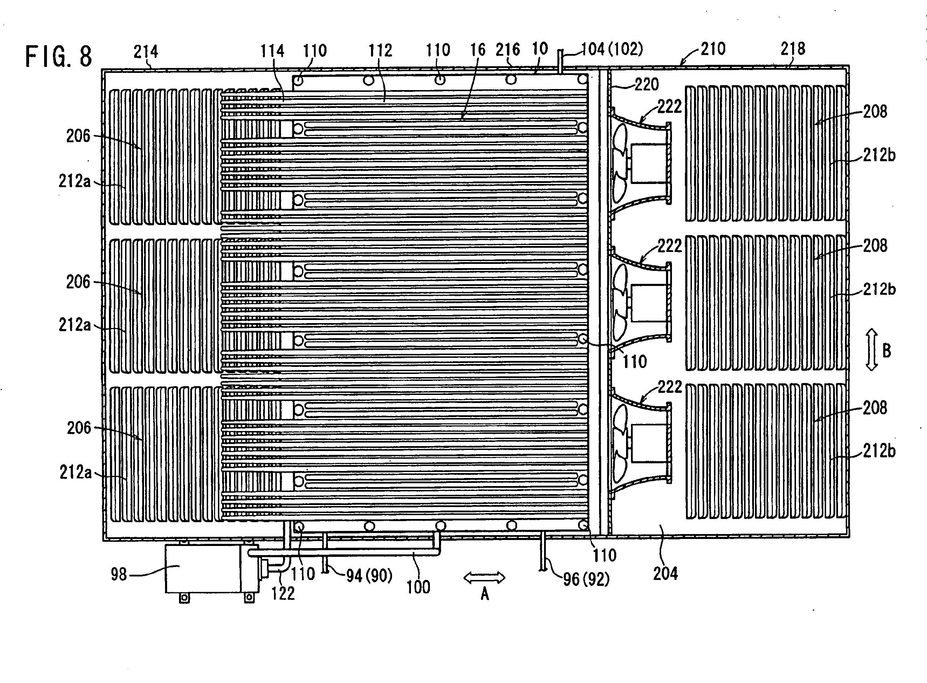

As shown in FIG. 8, the polymer electrolyte fuel cell 10 having the above structure is placed on the under panel 204 so that the stacking direction of the stack 12 indicated by the arrow B becomes perpendicular to the longitudinal direction of the vehicle body 202.

The supply louvers 206 are arranged in three lines, and the exhaust louvers 208 are arranged in three lines. Inclined baffle plates 212a, 212b are provided in openings of the supply louvers 206 and the exhaust louvers 208, respectively.

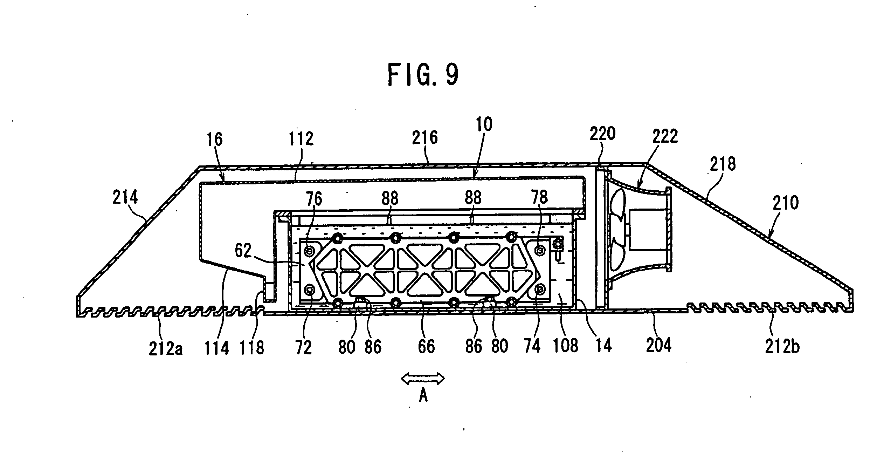

The hood 210 includes a first duct 214 covering the supply louvers 206, a flat section 216 covering the polymer electrolyte fuel cell 10, and a second duct 218 covering the exhaust louvers 208 (see FIGS. 1 and 9). The first duct 214 is inclined upwardly toward the guide section 116 of the condenser 16. The second duct 218 is inclined downwardly in the direction away from the polymer electrolyte fuel cell 10.

Further, a support plate 220 is vertically provided on the under panel 204 between the polymer electrolyte fuel cell 10 and the exhaust louvers 208. Thus, in the hood 210, the flat section 216 and the second duct 218 are divided by the support plate 220.

The support plate 220 has a plurality of through holes, and exhaust fans 222 are provided at the through holes. That is, the air in the flat section 216 is sucked by the exhaust fans 222, and discharged to the second duct 218.

Basically, the fuel cell vehicle 200, according to the embodiment of the present invention, equipped with the polymer electrolyte fuel cell 10 has the above structure. Next, operation and advantages of the polymer electrolyte fuel cell 10 and a method of cooling the stack 12 will be described.

Firstly, in fabricating the polymer electrolyte fuel cell 10, the stack 12 is placed on the rubber support spacers 82 provided on the bottom surface of the stack container case 14. Using the bolts 86, the stays 80 of the end plates 62, 64 are connected to the bottom surface of the stack container case 14 (see FIGS. 5 to 7). Thus, the stack 12 in the stack container case 14 is fixedly positioned.

Then, the second gas discharge pipe 90, the first gas discharge pipe 92, the first gas supply pipe 94, the second gas supply pipe 96, and the outlet pipe 100 are inserted into the through holes formed in one end surface of the stack container case 14 (see FIG. 2), and the respective pipes 90, 92, 94, 96, 100 are connected to the second gas discharge port 72, the first gas discharge port 74, the first gas supply port 76, the second gas supply port 78, and the coolant circulation pump 98. The terminal cables 102, 104 are inserted into the through holes formed in the end surface opposite to the one end surface. The terminal cables 102, 104 are connected to the tabs 56 of the current collecting plates 58, 60, respectively.

Next, the insulating organic solvent 108 such as Novec HFE-7100 or Novec-7200 is stored in the stack container case 14. At this time, since PTFE coating is applied to the inner wall surface of the stack container case 14 and the plate members 88, it is possible to prevent metal particles from being mixed into the organic solvent 108 from the stack container case 14 or the plate members 88.

As described above, the stack 12 includes the cooling plates 20. Spaces are formed between the first protrusions 42 of the cooling plate 20 and the separator 36, and between the second protrusions 44 and the separator 34 (see FIG. 4). Therefore, when the organic solvent 108 is stored in the stack container case 14, the organic solvent 108 flows into the stack 12.

In determining the amount of the organic solvent 108, it is sufficient that the liquid surface of the organic solvent 108 becomes higher than the upper end surface of the stack 12 (see FIGS. 6 and 7).

Next, using the bolts 110, the condenser 16 is fixedly positioned in the opening of the stack container case 14 at the upper position (see FIG. 2). The inlet pipe 122 is provided to extend from the trapping section 118 of the condenser 16 to the coolant circulation pump 98 to form the polymer electrolyte fuel cell 10.

As described above, in the embodiment of the present invention, it is not necessary to provide any coolant flow field for the coolant in the stack 12. Therefore, it is not necessary to provide insulating coating for the coolant flow field. As a result, the stack 12 can be fabricated very easily.

Further, since it is not necessary to provide pipes or a coolant supply source for supplying the coolant, the structure of the polymer electrolyte fuel cell 10 is simplified. Thus, the space for providing the polymer electrolyte fuel cell 10 can be reduced, and the layout of device components of the fuel cell vehicle 200 can be designed freely. Further, the weight of the polymer electrolyte fuel cell 10 can be reduced, and thus, the weight of the fuel cell vehicle 200 can be reduced advantageously.

The polymer electrolyte fuel cell 10 is fixedly positioned on the under panel 204 of the vehicle body 202, between the supply louvers 206 and the exhaust louvers 208 (see FIG. 8). Thereafter, the hood 210 is provided to cover the supply louvers 206, the polymer electrolyte fuel cell 10, and the exhaust louvers 208 (see FIGS. 1 and 9).

In operating the polymer electrolyte fuel cell 10, the hydrogen is supplied from a hydrogen supply source (not shown) such as a hydrogen gas cylinder to the first gas supply pipe 94, and the air is supplied from an air supply source (not shown) such as a compressor to the second gas supply pipe 96. The hydrogen is supplied to the anode electrode 22 through the first gas supply port 76 and the first gas flow field 38. The air is supplied to the cathode electrode 24 through the second gas supply port 78 and the second gas flow field 40. At the anode electrode 22, ionization reaction of the hydrogen is induced, and electrons generated in the reaction are collected from the current collecting plate 60, and used outside the fuel cell 10 as electrical energy for energizing the system for driving the fuel cell vehicle 200 electrically connected to the terminal cables 102, 104. Thus, the fuel cell vehicle 200 starts running.

While the fuel cell vehicle 200 is running, the outside air is supplied through the supply louvers 206. Since the baffle plates 212a of the supply louvers 206 and the first duct 214 are inclined upwardly toward the polymer electrolyte fuel cell 10, the outside air smoothly reaches the condenser 16 of the polymer electrolyte fuel cell 10. After the outside air reaches the condenser 16, the air is discharged to the second duct 218 under operation of the exhaust fans 222. Thereafter, the air is discharged to the outside from the exhaust louvers 208. Therefore, it should be understood that the exhaust fans 222 function as an air discharge assistance mechanism for assistance to discharge the air to the outside of the vehicle body 202.

As described above, since the exhaust fans 222 are provided, while the fuel cell vehicle 200 is running, the outside air swiftly flows through the hood 210, and is discharged to the outside. In the structure, the condenser 16 is cooled efficiently by the outside air.

During operation of the polymer electrolyte fuel cell 10, protons move through the solid polymer electrolyte membrane 26 to the cathode electrode 24. At the cathode electrode 24, the protons react with oxygen in the air supplied to the cathode electrode 24 and the electrons which have reached the cathode electrode 24 through the terminal cable 104, to produce water.

The unreacted hydrogen from the first gas flow field 38 is discharged from the first gas discharge pipe 92 through the first gas discharge port 74. Further, water produced at the cathode electrode 24, the unreacted oxygen, and nitrogen in the air from the second gas flow field 40 are discharged from the second gas discharge pipe 90 through the second gas discharge port 72.

The rubber support spacers 82 supporting the stack 12 are insulators, space is provided between the stack 12 and the stack container case 14, and the insulating organic solvent 108 is present in the space. Further, insulating coating of PTFE is applied to the inner wall surface of the stack container case 14. Thus, when the power generation is carried out, no leakage of electricity to the liquid or ground occurs.

In the cell reaction, the temperature of the stack 12 is increased to 80°C to 90°C. As described above, since the boiling temperature of the organic solvent 108 is lower than the operating temperature of the stack 12, boiling of the organic solvent 108 occurs, and the organic solvent 108 is vaporized. By the latent heat, the amount of heat is removed from the stack 12 to cool the stack 12.

At the time of boiling, in the case of using a liquid which can be boiled in the nucleate boiling state, vapor bubbles are developed continuously on the outer surface of the stack 12. The vapor bubbles move away from the stack 12 swiftly, and move rapidly and upwardly in the organic solvent 108. In this case, the outer surface of the stack 12 is not covered by the vapor bubbles. Therefore, the stack 12 can be cooled even more efficiently.

In the embodiment, the organic solvent 108 flows in the stack 12. Therefore, the amount of heat in the stack 12 is removed swiftly, and the stack can be cooled very efficiently.

The vaporized organic solvent 108 moves upwardly from the liquid surface as vapor, and moves to the fin section 112 of the condenser 16 cooled by the outside air. Therefore, the vapor is condensed into liquid droplets by cooling by the fins of the fin section 112. The outside air flows inside the hood 210 at high speed to efficiently cool the condenser 16. Therefore, the vaporized organic solvent 108 is condensed efficiently.

The liquid droplets are partially dropped onto the stack container case 14 from the fin section 112. Further, since the fins are inclined downwardly toward the guide section 116, the liquid droplets which have not been dropped flow toward the guide section 116 along the fins. After the liquid droplets reach the guide section 116, the liquid droplets flow along the guide fins 114. Then, the liquid droplets are trapped in the trapping section 118. The coolant circulation pump 98 returns the liquid droplets to the stack container case 14 through the inlet pipe 122 and the outlet pipe 100. Further, after the vapor of the liquid solvent 108 which has reached the guide section 116 without condensation in the fin section 112 is condensed by the guide fins 114, the vapor of the liquid solvent 108 returns to the stack container case 14 by the same route as mentioned above.

In the structure, since PTFE coating is applied to the fin section 112 of the condenser 16 and the guide section 116, metal particles from the fins or the guide fins 114 are not mixed into the liquid droplets.

Further, even if metal particles are mixed into the organic solvent 108, in the case where the insulating coating is formed on the outer wall surfaces of the second gas discharge pipe 90, the first gas discharge pipe 92, the first gas supply pipe 94, the second gas supply pipe 96, and the outlet pipe 100, leakage of electricity to the liquid can be avoided.

That is, in the embodiment of the present invention, reduction in the space for providing the polymer electrolyte fuel cell 10 is achieved, and the polymer electrolyte fuel cell 10 can be cooled efficiently. Further, it is possible to avoid leakage to the liquid or ground reliably.

If the vehicle body 202 is tilted while the fuel cell vehicle 200 is running along a curve, or running on a bumpy road surface, the organic solvent 108 stored in the stack container case 14 is dammed by the plate members 88. Thus, it is possible to prevent the stack 12 from being exposed from the organic solvent 108, and the stack 12 can be cooled reliably.

Further, since the polymer electrolyte fuel cell 10 is placed under the passenger compartment 205, even if the front part of the vehicle body 202 is damaged, the polymer electrolyte fuel cell 10 is not damaged. In the embodiment as descried above, the stack container case 14 is made of metal. Alternatively, the stack container case 14 may be made of resin.

Further, in particular, it is not necessary to provide the circulation mechanism such as the coolant circulation pump 98. In this case, the organic solvent 108 is condensed by the fins of the condenser into the liquid droplets, and the liquid droplets are dropped onto the stack container case 14. In one embodiment, only in this manner, the organic solvent 108 vaporized by cooling the stack 12 is returned to the stack container case 14.

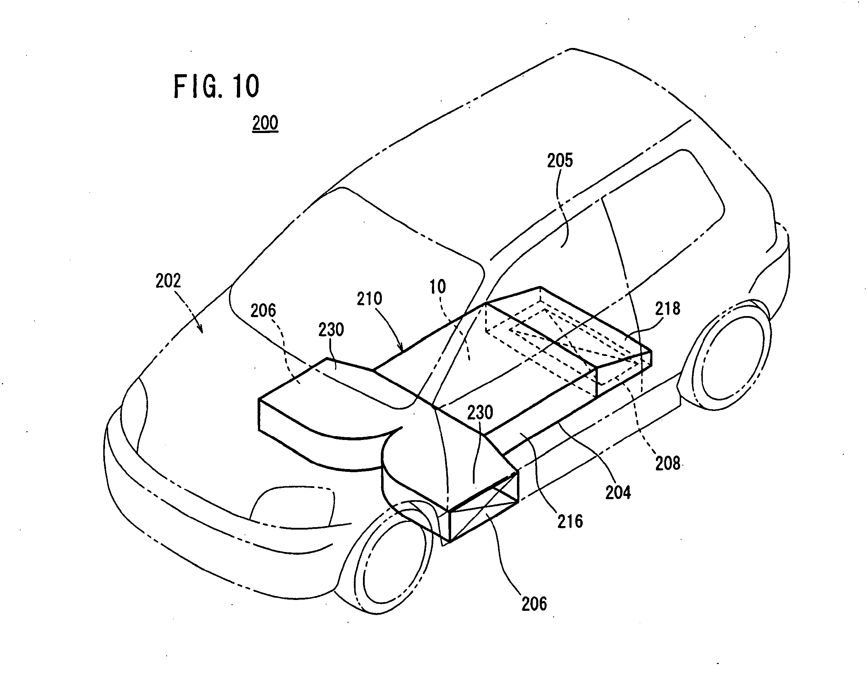

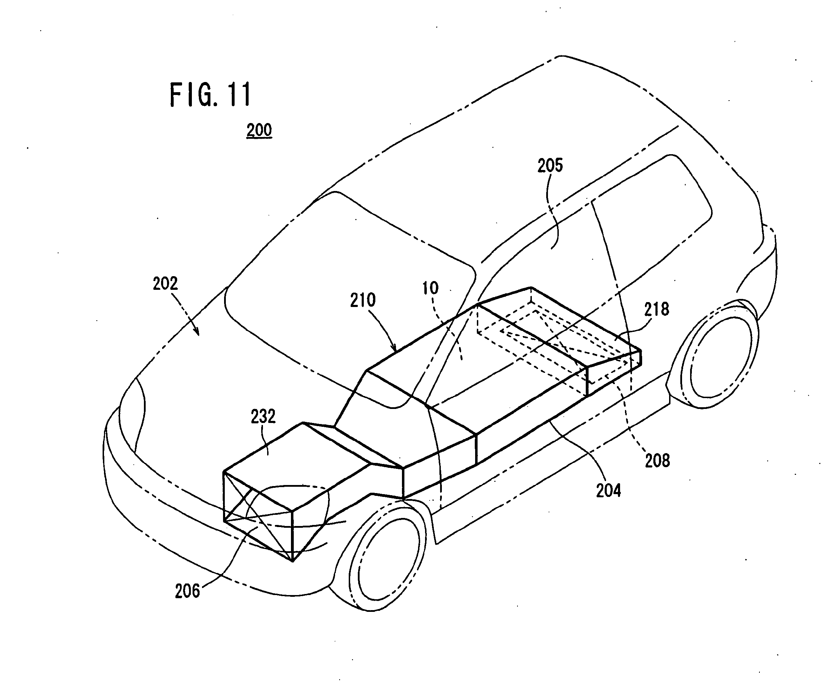

Further, the portion into which the outside air is supplied is not limited to the position under the vehicle body 202. As shown in FIG. 10, a duct 230 having openings on both sides of the vehicle body 202 may be provided so that the outside air can flow into the vehicle body 202 from both sides. Alternatively, as shown in FIG. 11, a duct 232 having an opening on the front side of the vehicle body 202 may be provided so that the outside air can flow into the vehicle body 202 from the front side.

## Claims

1. A fuel cell vehicle (200) having a vehicle body and a polymer electrolyte fuel cell (10) mounted in said vehicle body, said fuel cell (10) including a stack (12) formed by stacking a plurality of unit power generation cells (18), a stack container case (14) containing said stack (12), and a condenser (16) provided in said stack container case (14),
wherein
in said polymer electrolyte fuel cell (10), each of said unit power generation cells (18) includes an electrolyte electrode assembly (28) and a first separator (34) and a second separator (36) sandwiching said electrolyte electrode assembly (28), said electrolyte electrode assembly (28) including an anode electrode (22), a cathode electrode (24), and a solid polymer electrolyte (26) interposed between said anode electrode (22) and said cathode electrode (24);
said stack (12) is immersed in an electrically insulating liquid coolant (108) inside said stack container case (14) to cool said stack (12);
said stack container case (14) is provided under a passenger compartment of said vehicle body (202); and
an air supplied from an air inlet (206) of said vehicle body (202) contacts said condenser (16) to condense the liquid coolant (108) vaporized at said stack container case (14) when cooling said stack (12).

2. A fuel cell vehicle (200) according to claim 1,
wherein coating is applied to at least one of a surface of said condenser (16) and an inner surface of said stack container case (14).

3. A fuel cell vehicle (200) according to claim 2,
wherein the coating comprises fluorine resin.

4. A fuel cell vehicle (200) according to claim 3,
wherein the coating comprises polytetrafluoroethylene.

5. A fuel cell vehicle (200) according to any one of claims 1 to 4, wherein said stack (12) includes a cooling plate (20) having at least one groove (42, 44) for supplying the liquid coolant (108) into said stack (12).

6. A fuel cell vehicle (200) according to any one of claims 1 to 5, wherein a plurality of protrusions (88) protruding toward said stack (12) are provided on an inner surface of said stack container case (14), and said protrusions (88) are exposed from the liquid surface of the liquid coolant (108).

7. A fuel cell vehicle (200) according to any one of claims 1 to 6, further comprising a trapping section (118) for trapping the condensed liquid coolant (108) at said condenser (16), and a circulation mechanism for allowing the liquid coolant (108) to flow from said trapping section (118) back to said stack container case (14).

8. A fuel cell vehicle (200) according to any one of claims 1 to 7, wherein the liquid coolant (108) is a liquid which can be boiled into vapor in the nucleate boiling state.

9. A fuel cell vehicle (200) according to claim 8,
wherein the boiling temperature of the liquid coolant (108) is lower than an operating temperature of said stack (12) by 10°C to 25°C.

10. A fuel cell vehicle (200) according to claim 9,
wherein the liquid coolant (108) is a lower alcohol or a solvent of fluorine compound.

11. A fuel cell vehicle (200) according to any one of claims 1 to 10, further comprising an air discharge assistance mechanism for assistance to discharge the air supplied from said air inlet to the outside of said vehicle body (202).

## Patentansprüche

1. Brennstoffzellenfahrzeug (200), das einen Fahrzeugkörper und eine Polymerelektrolyt-Brennstoffzelle (10) aufweist, die in dem Fahrzeugkörper angebracht ist, wobei die Brennstoffzelle (10) einen Stapel (12) umfasst, der durch Stapeln einer Mehrzahl von Bauteil-Energieerzeugungszellen (18) gebildet sind, ein Stapel-Behältergehäuse (14), das den Stapel (12) enthält, und einen Kondensator (16), der in dem Stapel-Behältergehäuse (14) vorgesehen ist,
wobei
in der Polymerelektrolyt-Brennstoffzelle (10) jede der Bauteil-Energieerzeugungszellen (18) eine Elektrolyt-Elektroden Anordnung (28) und ein erstes Trennelement (34) und ein zweites Trennelement (36) umfasst, welche die Elektrolyt-Elektroden Anordnung (28) zwischen sich angeordnet haben, wobei die Elektrolyt-Elektroden Anordnung (28) eine Anodenelektrode (22), eine Kathodenelektrode (24) und einen Festpolymer-Elektrolyten (26) umfasst, der zwischen der Anodenelektrode (22) und der Kathodenelektrode (24) angeordnet ist,
der Stapel (12) in ein elektrisch isolierendes, flüssiges Kühlmittel (108) innerhalb des Stapel-Behältergehäuses (14) getaucht ist, um den Stapel (12) zu kühlen,
das Stapel-Behältergehäuse (14) unter einem Passagier-Abteil des Fahrzeugkörpers (202) vorgesehen ist, und
von einem Lufteinlass (206) des Fahrzeugkörpers (202) zugeführte Luft in Kontakt mit dem Kondensator (16) steht, um das flüssige Kühlmittel (108) zu kondensieren, das an dem Stapel-Behältergehäuse (14) beim Kühlen des Stapels (12) verdampft worden ist.

2. Brennstoffzellenfahrzeug (200) gemäß Anspruch 1,
wobei eine Beschichtung auf wenigstens eine von einer Fläche des Kondensators (16) und einer Innenfläche des Stapel-Behältergehäuses (14) aufgebracht ist.

3. Brennstoffzellenfahrzeug (200) gemäß Anspruch 2,
wobei die Beschichtung Fluorharz umfasst.

4. Brennstoffzellenfahrzeug (200) gemäß Anspruch 3,
wobei die Beschichtung Polytetrafluorethylen umfasst.

5. Brennstoffzellenfahrzeug (200) gemäß einem der Ansprüche 1 bis 4,
wobei der Stapel (12) eine Kühlplatte (20) umfasst, die wenigstens eine Rille (42, 44) zum Zuführen des flüssigen Kühlmittels (108) in den Stapel (12) aufweist.

6. Brennstoffzellenfahrzeug (200) gemäß einem der Ansprüche 1 bis 5,
wobei eine Mehrzahl von Vorsprüngen (88), die zu dem Stapel (12) hin vorstehen, an einer Innenfläche des Stapel-Behältergehäuses (14) vorgesehen sind, und die Vorsprünge (88) von der Flüssigkeitsoberfläche des flüssigen Kühlmittels (108) herausgestellt sind.

7. Brennstoffzellenfahrzeug (200) gemäß einem der Ansprüche 1 bis 6, weiterhin umfassend einen Fallen-Abschnitt (118) zum Einfangen des kondensierten flüssigen Kühlmittels (108) an dem Kondensator (16), und einen Zirkulations-Mechanismus, um zu ermöglichen, dass das flüssige Kühlmittel (108) von dem Fallen-Abschnitt (118) zurück zu dem Stapel-Behältergehäuse (14) fließt

8. Brennstoffzellenfahrzeug (200) gemäß einem der Ansprüche 1 bis 7,
wobei das flüssige Kühlmittel (108) eine Flüssigkeit ist, die im Blasenverdampfungs-Zustand verdampft werden kann.

9. Brennstoffzellenfahrzeug (200) gemäß Anspruch 8,
wobei die Siedetemperatur des flüssigen Kühlmittels (108) um 10°C bis 25°C niedriger ist als eine Betriebstemperatur des Stapels (12).

10. Brennstoffzellenfahrzeug (200) gemäß Anspruch 9,
wobei das flüssige Kühlmittel (108) ein niederer Alkohol oder ein Lösungsmittel aus einer Fluorverbindung ist.

11. Brennstoffzellenfahrzeug (200) gemäß einem der Ansprüche 1 bis 10, weiter umfassend einen Luftauslass-Unterstützungsmechanismus zum Unterstützen des Auslassens der von dem Lufteinlass zugeführten Luft zu dem Äußeren des Fahrzeugkörpers (202).

## Revendications

1. Véhicule à pile à combustible (200) comportant une carrosserie de véhicule et une pile à combustible à électrolyte polymérique (10) montée dans ladite carrosserie de véhicule, ladite pile à combustible (10) comprenant un empilage (12) formé en empilant une pluralité de piles de génération d'énergie (18) unitaire, un boîtier de logement d'empilage (14) contenant ledit empilage (12), et un condenseur (16) prévu dans ledit boîtier de logement d'empilage (14), dans lequel
dans ladite pile à combustible à électrolyte polymérique (10), chacune desdites piles de génération d'énergie (18) unitaire comprend un ensemble d'électrodes à électrolyte (28) et un premier séparateur (34) et un deuxième séparateur (36) entourant ledit ensemble d'électrodes à électrolyte (28), ledit ensemble d'électrodes à électrolyte (28) comprenant une électrode d'anode (22), une électrode de cathode (24), et un électrolyte polymérique solide (26) interposé entre ladite électrode d'anode (22) et ladite électrode de cathode (24) ;
ledit empilage (12) est immergé dans un liquide de refroidissement (108) électriquement isolant à l'intérieur dudit boîtier de logement d'empilage (14) pour refroidir ledit empilage (12) ;
ledit boîtier de logement d'empilage (14) est prévu sous un habitacle de ladite carrosserie de véhicule (202) ; et
de l'air délivré par un orifice d'entrée d'air (206) de ladite carrosserie de véhicule (202) vient en contact avec ledit condenseur (16) pour condenser le liquide de refroidissement (108) vaporisé au niveau dudit boîtier de logement d'empilage (14) lors du refroidissement dudit empilage (12).

2. Véhicule à pile à combustible (200) selon la revendication 1, dans lequel un revêtement est appliqué à au moins l'une d'une surface dudit condenseur (16) et d'une surface intérieure dudit boîtier de logement d'empilage (14).

3. Véhicule à pile à combustible (200) selon la revendication 2, dans lequel le revêtement comprend de la résine fluorée.

4. Véhicule à pile à combustible (200) selon la revendication 3, dans lequel le revêtement comprend du polytétrafluoroéthylène.

5. Véhicule à pile à combustible (200) selon l'une quelconque des revendications 1 à 4, dans lequel ledit empilage (12) comprend une plaque de refroidissement (20) comportant au moins une rainure (42, 44) pour délivrer le liquide de refroidissement (108) dans ledit empilage (12).

6. Véhicule à pile à combustible (200) selon l'une quelconque des revendications 1 à 5, dans lequel une pluralité de protubérances (88) faisant saillie vers ledit empilage (12) sont prévues sur une surface intérieure dudit boîtier de logement d'empilage (14), et lesdites protubérances (88) sont exposées de la surface de liquide du liquide de refroidissement (108).

7. véhicule à pile à combustible (200) selon l'une quelconque des revendications 1 à 6, comprenant en outre une section de piège (118) pour piéger le liquide de refroidissement (108) condensé au niveau dudit condenseur (16), et un mécanisme de circulation pour permettre au liquide de refroidissement (108) de circuler de ladite section de piège (118) de retour vers ledit boîtier de logement d'empilage (14).

8. Véhicule à pile à combustible (200) selon l'une quelconque des revendications 1 à 7, dans lequel le liquide de refroidissement (108) est un liquide qui peut être amené en ébullition sous forme de vapeur dans l'état d'ébullition nucléée.

9. Véhicule à pile à combustible (200) selon la revendication 8, dans lequel la température d'ébullition du liquide de refroidissement (108) est inférieure à une température de fonctionnement dudit empilage (12) de 10 °C à 25 °C.

10. Véhicule à pile à combustible (200) selon la revendication 9, dans lequel le liquide de refroidissement (108) est un alcool inférieur ou un solvant d'un composé fluoré.

11. Véhicule à pile à combustible (200) selon l'une quelconque des revendications 1 à 10, comprenant en outre un mécanisme d'assistance à la décharge d'air pour aider à décharger l'air délivré par ledit orifice d'entrée d'air à l'extérieur de ladite carrosserie de véhicule (202).
